Europäisches Patentamt

European Patent Office

Office européen des brevets

(11) Numéro de publication: **0 269 470 B1**

(12) **FASCICULE DE BREVET EUROPEEN**

(45) Date de publication de fascicule du brevet: **15.04.92** (51) Int. Cl.5: **B29C 67/14**, E06B 3/00

(21) Numéro de dépôt: **87402265.0**

(22) Date de dépôt: **09.10.87**

(54) **Procédé de fabrication d' un cadre à structure composite.**

(30) Priorité: **24.10.86 FR 8614809**

(43) Date de publication de la demande:
**01.06.88 Bulletin 88/22**

(45) Mention de la délivrance du brevet:
**15.04.92 Bulletin 92/16**

(84) Etats contractants désignés:
**DE GB IT**

(56) Documents cités:
**FR-A- 2 467 758
FR-A- 2 552 016
GB-A- 893 292
GB-A- 1 245 981
US-A- 4 473 520**

**PATENT ABSTRACTS OF JAPAN, vol. 10, no.
81 (M-465)[2130], 29 mars 1986; & JP-A-60 222
235 (MITSUBISHI DENKI K.K.) 06-11-1985**

**PATENT ABSTRACTS OF JAPAN, vol. 10, no.
81 (M-465)[2138], 29 mars 1986; & JP-A-60 222
236 (MITSUBISHI DENKI K.K.) 06-11-1985**

**PATENT ABSTRACTS OF JAPAN, vol. 9, no.
198 (M-404)[1921], 15 août 1985; & JP-A-60 61
361 (TOYODA GOSEI K.K.) 09-04-1985**

**PATENT ABSTRACTS OF JAPAN, vol. 9, no.
183 (M-400)[1906], 30 julliet 1985; & JP-A-60
50 069 (NIPPON CARBON K.K.) 19-03-1985**

(73) Titulaire: **AUTOMOBILES PEUGEOT
75, avenue de la Grande Armée
F-75116 Paris(FR)**

Titulaire: **AUTOMOBILES CITROEN
62 Boulevard Victor-Hugo
F-92200 Neuilly-sur-Seine(FR)**

(72) Inventeur: **Andre, Georges
90 rue des Cantons
F-25400 Audincourt(FR)**
Inventeur: **Gerard, André
5, rue de Gerbevilliers
F-25400 Audincourt(FR)**

(74) Mandataire: **Kohn, Philippe et al
c/o CABINET LAVOIX 2, place d'Estienne
d'Orves
F-75441 Paris Cédex 09(FR)**

# Description

La présente invention concerne un procédé de fabrication d'un cadre à structure composite comprenant des fibres renforçantes imprégnées de résine thermodurcie.

Plus particulièrement, l'invention se rapporte à la fabrication de cadres rigides et légers, destinés notamment à entourer un panneau, tel que pour une vitre ou une porte de véhicule automobile, ou à constituer une armature de siège ou un arceau de sécurité.

On connait dans l'état de la technique des pièces formées par injection de matières plastiques armées de fibres de verre ou de carbone, par compression de polyesters imprégnés de telles fibres ou par pultrusion de fibres imprégnées de résines thermodurcissables.

Cependant, ces procédés sont parfois peu compatibles avec une fabrication de pièces en forme de cadre mince, et confèrent à la pièce une résistance parfois insuffisante en raison de la forme et de la position aléatoires des fibres contenues dans le matériau composite.

Certains cadres sont ainsi réalisés à partir d'un profilé s'étendant suivant une boucle fermée, mais la fermeture de cette boucle s'effectue soit par superposition volumineuse de deux tronçons extrêmes du profilé, soit par jonction peu fiable en bout de ces tronçons.

Il a déjà également été proposé, par exemple par le document JP-A-60 222 235 un volant à structure composite comprenant des fibres renforçantes imprégnées de résine thermodurcie, une âme centrale formant une boucle fermée, en matériau alvéolaire, enfermée dans une gaine formée de plusieurs couches de fibres continues tressées et imprégnées de résine.

Toutefois cette structure ne permet pas d'obtenir avantageusement des éléments en forme de cadre destinés notamment à entourer un panneau.

Afin de résoudre ce problème et d'obtenir un cadre qui soit léger et particulièrement résistant, le document GB-A-893292 propose un cadre à structure composite comprenant des fibres renforçantes imprégnées de résine thermodurcie, du type comportant une âme centrale formant une bouche fermée en matériau alvéolaire, enfermée dans une gaine formée de plusieurs couches de fibres continues tressées et imprégnées de résine, caractérisé en ce que la dimension transversale de la gaine est plus grande que celle de l'âme, et en ce que la section transversale du cadre comprend une portion de gaine enfermant l'âme et au moins une autre portion de gaine aplatie sur elle-même.

L'invention a pour objet un procédé de fabrication d'un cadre à structure composite comprenant des fibres renforçantes imprégnées de résine thermodurcie, du type comportant une âme centrale formant une bouche fermée en matériau alvéolaire, enfermée dans une gaine formée de plusieurs couches de fibres continues tressées et imprégnées de résine, procédé au cours duquel on réalise un demi-produit qui comporte une âme centrale formant une bouche fermée, en matériau alvéolaire déformable, et une gaine souple en fibres continues tressées, enveloppant l'âme sur plusieurs épaisseurs, on place le demi-produit dans une empreinte d'un moule thermo-régulé, de forme et de section telles que la section transversale du cadre que l'on désire réaliser comprend une portion de gaine enfermant l'âme et au moins une autre portion de gaine aplatie sur elle-même, on injecte sur le demiproduit une résine thermo-durcissable et on durcit ladite résine, caractérise en ce qu'on réalise le demiproduit en engageant entièrement sur l'âme centrale, à extrémités libres, une gaine souple de fibres tressées dont la dimension transversale est plus grande que celle de l'âme et qui, à l'état libre, est au moins deux fois plus longue que l'âme, on assemble, par soudage ou par collage, les deux extrémités de celle-ci pour former une bouche fermée, puis on chausse la gaine sur elle-même par engagement d'une de ses extrémités autour de l'autre sur toute la longueur de l'âme.

L'invention sera mieux comprise à l'aide de la description qui va suivre, donnée uniquement à titre d'exemple et faite en se référant aux dessins annexés, sur lesquels :

- les Fig. 1 et 2 représentent un exemple de réalisation d'un cadre pour une structure de porte de véhicule automobile;
- les Fig.3 à 7 représentent des sections différentes de cadre selon l'invention;
- les Fig.8 et 9 représentent respectivement une vue de face et une vue en coupe d'un premier mode de réalisation d'un demi-produit pour un cadre selon l'invention;
- les Fig. 10 et 11 représentent respectivement une vue de face et une vue en coupe d'un second mode de réalisation d'un demi-produit pour un cadre selon l'invention; et
- les Fig. 12 à 19 illustrent différentes étapes du procédé de fabrication d'un demi-produit pour un cadre selon l'invention.

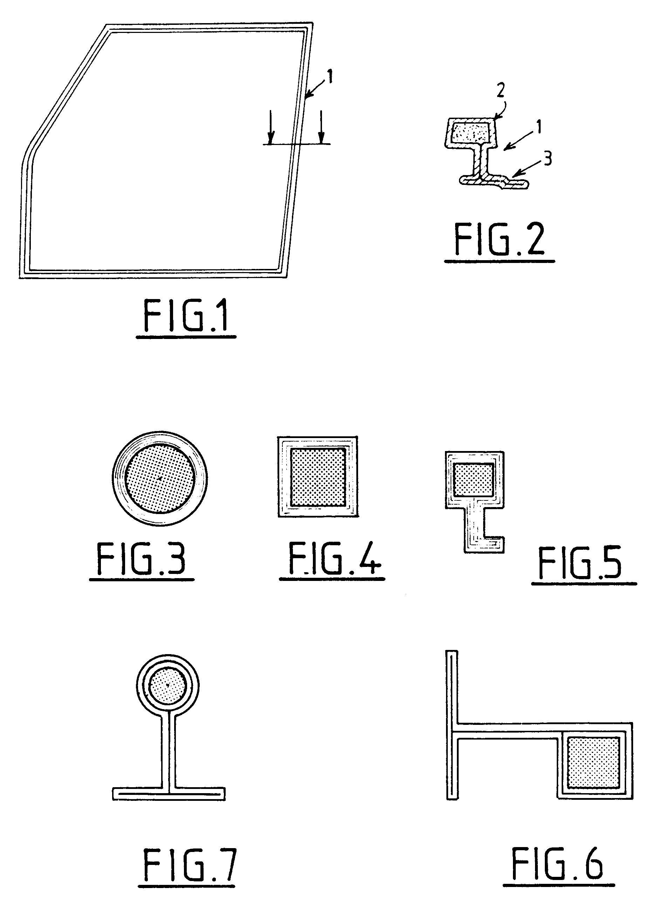

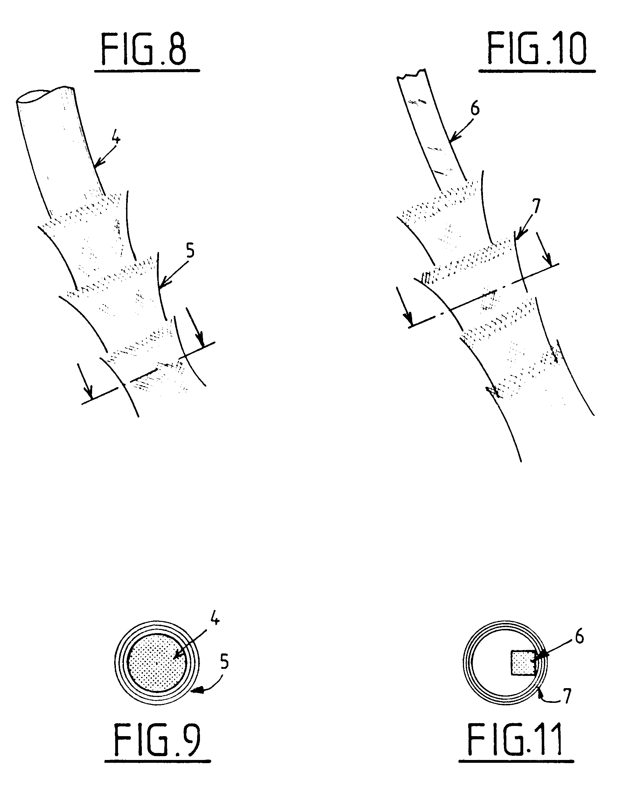

Ainsi qu'un peut le voir sur les Fig. 1 et 2, un cadre selon l'invention est destiné par exemple à constituer une structure de support 1 pour une porte de véhicule automobile. Cette structure est par exemple constituée d'une portion de section à peu près rectangulaire 2 et d'une portion 3 comportant des logements destinés à recevoir par exemple des joints d étanchéité de la porte. Cependant, le cadre selon l'invention peut présenter d'autres sections telles que par exemple celles qui sont représentées sur les Fig.3 à 7, sur lesquelles on reconnait des sections rondes et carrées, mais qui peuvent également être ovales ou hexagonales. Ce cadre est formé à partir d'un demi-produit dont deux exemples de réalisation sont illustrés sur les Fig.8, 9 et 10, 11 respectivement.

Ainsi par exemple, sur les Fig.8 et 9, le demi-produit comporte une âme centrale 4 en matériau alvéolaire déformable sur laquelle est disposée une gaine souple 5 en fibres continues tressées enveloppant l'âme sur plusieurs épaisseurs.

Ainsi, sur ces figures, la gaine 5 recouvre trois fois l'âme 4 qui présente une section de forme et de dimension à peu près égales à celles de la gaine.

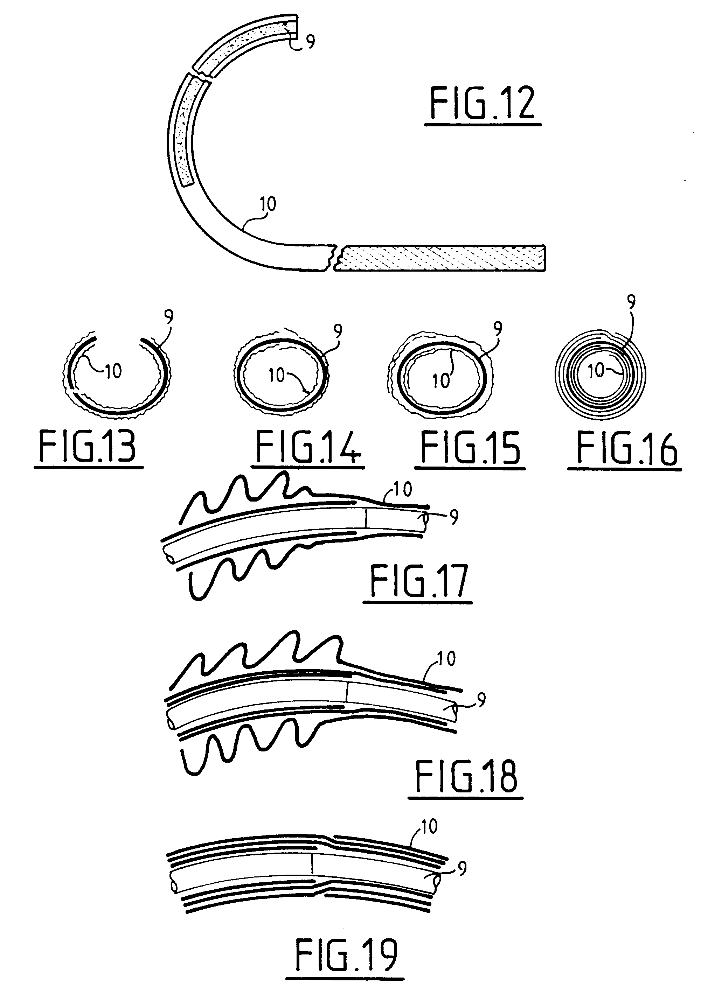

Par contre, sur les Fig. 10 et 11, l'âme 6 présente une section carrée de dimension nettement inférieure à la dimension transversale de la gaine 7, qui dans ce cas recouvre quatre fois l'âme. Le demi-produit utilisé pour la réalisation du cadre selon l'invention, est réalisé, ainsi qu'on peut le voir sur les Fig.12 à 19, en engageant entièrement sur une âme centrale 9 en matériau alvéolaire déformable, et à extrémités libres, une gaine souple 10 de fibres tressées dont la longueur à l'état libre, est par exemple au moins égale à deux fois celle de l'âme (Fig.12). Cette gaine est ensuite refoulée (Fig.13) sur l'âme de manière que les deux extrémités de l'âme soient libérées et que l'on puisse les assembler, par exemple par soudage ou par collage, ainsi que cela est représenté sur la Fig.14, de manière à constituer une boucle fermée. La gaine est ensuite chaussée sur elle-même, comme cela est représenté sur les Fig.15 à 19 de manière à envelopper l'âme 9 sur plusieurs épaisseurs.

Il est à noter que la longueur de l'âme 9 est égale à la longueur du périmètre moyen du cadre composite qu'il y a lieu de réaliser et que la longueur de la gaine de fibres renforçantes tressées est avantageusement un multiple de la longueur du périmètre de ce cadre composite à réaliser, de manière à créer un nombre de couches superposées de renforts tressés, calculé pour satisfaire au cahier des charges imposé du cadre à fabriquer. Ainsi, lors de ces opérations, l'une des portions extrêmes de la gaine est chaussée sur l'autre portion extrême de celle-ci, qui est maintenue immobile sur l'âme. On poursuit alors cette opération sur toute la longueur de l'âme, tout en rallongeant la partie de gaine comprimée précédemment jusqu'à ce que les deux extrémités de la gaine se rejoignent, par exemple au niveau de l'assemblage des deux extrémités de l'âme.

Les gaines de fibres renforçantes tressées peuvent par exemple être fabriquées à partir de fibres de verre, de carbone, aramide ou mixte, ou de fibres polyester, polypropylène, etc. L'angle de tresssage de celles-ci peut être choisi entre 0 et 60°.

L'âme centrale dont le rôle est de faciliter le glissement de la gaine sur elle-même pour obtenir les différentes couches de renforts tressés superposés, et d'alléger les sections épaisses du profilé, est constituée de rubans de sections diverses comme on l'a déjà mentionné, en matériau léger, malléable et déformable comme par exemple en mousses thermo-plastiques (PVC, polyoléfine, polyuréthanne, etc ...) ou en résines thermo-durcissables (époxy, polyester, etc...) expansibles chargées de matériaux à faible densité (farine de bois, etc ..).

Le demi-produit ainsi obtenu est ensuite disposé dans une empreinte appropriée d'un moule thermo-régulé, par exemple à 120 degrés, dont la section et la forme correspondent à celles du cadre que l'on désire obtenir. Après la fermeture du moule, on injecte une résine réactive à hautes caractéristiques thermo-durcissables (résine époxy, vinylester, polyester, etc ..) sur le demi-produit et on durcit ladite résine pour obtenir le cadre.

Il est également à noter que dans certains cas et comme cela est représenté sur les Fig.2, 5, 6, 7, 10 et 11, la dimension transversale de la gaine est plus grande que celle de l'âme, de sorte que la section transversale du cadre peut comprendre une portion de gaine enfermant l'âme et au moins une autre portion de gaine aplatie sur elle-même de manière à constituer par exemple les rebords des logements délimités dans la portion 3 du cadre représenté sur la Fig.2.

## Revendications

1. Procédé de fabrication d'un cadre à structure composite comprenant des fibres renforçantes imprégnées de résine thermodurcie, du type comportant une âme centrale (4;6;9) formant une bouche fermée en matériau alvéolaire, enfermée dans une gaine (5;7;10) formée de plusieurs couches de fibres continues tressées et imprégnées de résine, procédé au cours duquel on réalise un demi-produit qui comporte une âme centrale (4;6;9) formant une bouche fermée, en matériau alvéolaire déformable, et une gaine souple (5;7;10) en fibres continues tressées, enveloppant l'âme sur plusieurs épaisseurs, on place le demi-produit dans une empreinte d'un moule thermo-régulé, de forme et de section telles que la section transversale du cadre que l'on désire réaliser comprend une portion (2) de gaine enfermant l'âme et au moins une autre portion (3) de gaine aplatie sur elle-même, on injecte sur le demi-produit une résine thermo-durcissable et on durcit ladite résine, caractérisé en ce qu'on réalise le demi-produit en engageant entièrement sur l'âme centrale (9), à extrémités libres, une gaine souple (10) de fibres tressées dont la dimension transversale est plus grande que celle de l'âme et qui, à l'état libre, est au moins deux fois plus longue que l'âme, on assemble, par soudage ou par collage, les deux extrémités de celle-ci pour former une bouche fermée, puis on chausse la gaine sur elle-même par engagement d'une de ses extrémités autour de l'autre sur toute la longueur de l'âme.

## Claims

1. A method of manufacturing a frame with a composite structure, comprising reinforcing fibres impregnated with thermoset resin, of the type comprising a central core (4; 6; 9) forming a closed loop made of alveolar material, enclosed in a sheath (5; 7; 10) formed of several layers of continuous, interwoven fibres impregnated with resin, in the course of which method a semi-finished product is produced which comprises a central core (4; 6; 9) forming a closed loop, made of deformable alveolar material, and a flexible sheath (5; 7; 10) made of continuous, interwoven fibres, enveloping the core over several thicknesses, and the semi-finished product is placed in an impression of a thermo-regulated mould, of form and section such that the cross-section of the frame that one wishes to produce comprises a sheath portion (2) enclosing the core and at least one other sheath portion (3) flattened on itself, and a thermosetting resin is injected onto the semi-finished product and the said resin is hardened, characterised in that the semi-finished product is produced by engaging a flexible sheath (10) made of interwoven fibres entirely on the central core (9), having free ends, the transverse dimension of which flexible sheath is greater than that of the core and which, in the free state, is at least twice as long as the core, and the two ends of the latter are joined by soldering or gluing in order to form a closed loop, and then the sheath is fitted onto itself by engaging one of its ends about the other over the whole length of the core.

## Patentansprüche

1. Verfahren zum Herstellen eines Rahmens aus Strukturwerkstoff mit verstärkenden Fasern, die mit wärmegehärtetem Harz getränkt sind, des Typs, der einen zentralen Kern (4; 6; 9) enthält, welcher einen geschlossenen Ring aus zelligem Material bildet, eingeschlossen in eine Hülle (5; 7; 10), die aus mehreren Schichten zusammnehängender verflochtener und mit Harz getränkter Fasern gebildet ist, wobei man im Laufe des Verfahrens ein Halbprodukt fertigt, das einen zentralen Kern (4; 6; 9), welcher einen geschlossenen Ring bildet, aus deformierbarem zelligen Material und eine geschmeidige Hülle (5; 7; 10) aus Zusammenhängenden verflochtenen Fasern, die den Kern auf mehreren Schichthöhen einhüllt, umfaßt, man das Halbprodukt in ein Nest einer wärmegeregelten Form legt, wobei Ausbildung und Schnitt so sind, daß der Querschnitt des Rahmens, den man fertigen möchte, einen Hüllenabschnitt (2), der den Kern einschließt, und wenigstens einen weiteren Hüllenabschnitt (3), der flach auf sich selbst liegt, aufweist, man auf das Halbprodukt ein wärmehärtbares Harz spritzt und man das Harz aushärtet, dadurch gekennzeichnet, daß man das Halbprodukt fertigt, indem man auf dem zentralen Kern (9), an freien Enden, eine geschmeidige Hülle (10) aus verflochtenen Fasern, deren Querschnittsabmessung größer ist als die des Kernes ist und die, im freien Zustand, wenigstens zweimal so lang ist wie der Kern, vollständig zum Eingriff bringt, man, durch Schweißen oder durch Kleben, seine beiden Enden zusammenfügt, um einen geschlossenen Ring zu bilden, man dann die Hülle durch Eingriff einer ihrer Enden um das andere über die ganze Länge des Kernes über sich selbst zieht.

FIG.1

FIG.2

FIG.3

FIG.4

FIG.5

FIG.7

FIG.6

FIG.8

FIG.10

FIG.9

FIG.11

FIG.12

FIG.13  FIG.14  FIG.15  FIG.16

FIG.17

FIG.18

FIG.19

7